# EUROPEAN PATENT APPLICATION

(11) **EP 4 772 773 A1**
(43) Date of publication of application: **08.07.2026**
(21) Application number: 24859705.6
(22) Date of filing: 26.08.2024
(51) Int. Cl.: F16J 15/38, F16J 15/34

(54) **MECHANICAL SEAL**

(30) Priority: 31.08.2023 JP 2023141698
(71) Applicant: Eagle Industry Co., Ltd., Minato-ku Tokyo 105-8587 (JP)
(72) Inventor: MASUMI, Yuki, Tokyo 105-8587 (JP); HISHIKAWA, Takao, Tokyo 105-8587 (JP); OKADA, Tetsuzo, Tokyo 105-8587 (JP); KATORI, Hikaru, Tokyo 105-8587 (JP); MORIYA, Osamu, Tokyo 105-8587 (JP); NAKAHARA, Nobuo, Tokyo 105-8587 (JP)
(74) Representative: WSL Patentanwälte Partnerschaft mbB
(86) International application number: PCT/JP2024/030260
(87) International publication number: WO 2025/047672

(57) **Abstract**

To provide a mechanical seal that is capable of stabilizing surface pressure.

One seal ring 10 and a case 20 are in contact with each other in an axial direction. A gasket 30 has a radial-direction extending portion 32 located between the one seal ring 10 and the case 20 in the axial direction. The radial-direction extending portion 32 is disposed in a recessed portion 14 that is formed so as to be recessed in the axial direction from at least one of the one seal ring 10 and the case 20. An axial gap Al is formed between the radial-direction extending portion 32 and at least one of the one seal ring 10 and the case 20.

## Description

### {TECHNICAL FIELD}

The present invention relates to a mechanical seal, for example a mechanical seal for sealing a rotating shaft.

### {BACKGROUND ART}

A mechanical seal is used by being housed between a housing of a fluid device and a rotating shaft disposed to extend through the housing. Specifically, a mechanical seal has a function of preventing leakage of a sealed fluid by bringing a sliding surface of a stationary seal ring attached to the housing into sliding contact with a sliding surface of a rotating seal ring, which is attached to the rotating shaft and rotates, in a circumferential direction.

For example, the mechanical seal as illustrated in Patent Citation 1 mainly includes a seal ring, a floating sheet, a sleeve, and a shock absorbing rubber. The sleeve is formed to have a substantially C-shaped section. The floating sheet with the shock absorbing rubber fitted thereto is fitted inside the sleeve. The shock absorbing rubber is a so-called cup gasket formed to have a substantially L-shaped section. An axial-direction extending portion in the shock absorbing rubber is disposed between the sleeve and the floating sheet to seal the gap therebetween in a radial direction.

### {CITATION LIST}

### {Patent Literature}

Patent Citation 1:Microfilm of JP1983-186981 (JP60-095269U1) (Pages 5, 6, FIG. 3)

In such a mechanical seal of Patent Citation 1, a radial-direction extending portion in the shock absorbing rubber extending in a radial direction of the rotating shaft is disposed between the sleeve and the floating sheet in an axial direction. The radial-direction extending portion of the shock absorbing rubber is in contact with a back surface in the floating sheet. Accordingly, the shock absorbing rubber is adapted to be prevented from coming off even if a force acts in the direction in which it comes off.

### {SUMMARY OF INVENTION}

### {Technical Problem}

However, in the mechanical seal of Patent Citation 1, not only the fluid pressure of the sealed fluid but also the elastic force of the radial-direction extending portion in the shock absorbing rubber acts on the floating sheet, so that there is a risk of excessive surface pressure being generated.

The present invention has been made in view of such problems, and an object of the present invention is to provide a mechanical seal capable of stabilizing surface pressure.

### {Solution to Problem}

In order to solve the foregoing problems, a mechanical seal according to the present invention includes a stationary seal ring attached to a side of a housing; a rotating seal ring attached to a side of a rotating shaft extending through the housing; a case configured for holding one of the stationary seal ring and the rotating seal ring; and a gasket disposed between the one of the stationary seal ring and the rotating seal ring, and the case, wherein sliding surfaces of the stationary seal ring and the rotating seal ring which rotate relatively and slidably with each other to separate a sealed fluid space from a leakage space, the one of the stationary seal ring and the rotating sear ring, and the case are brought into contact with each other in an axial direction, the gasket has a radial-direction extending portion located between the one of the stationary seal ring and the rotating seal ring, and the case in the axial direction, the radial-direction extending portion is disposed in a recessed portion formed so as to be recessed in the axial direction from at least one of the one of the stationary seal ring and the rotating seal ring, and the case, and an axial gap is formed between the radial-direction extending portion and at least one of the one of the stationary seal ring and the rotating seal ring, and the case. According to the aforesaid feature of the present invention, the elastic force of the radial-direction extending portion acting on the one of the stationary seal ring and the rotating seal ring can be reduced as much as possible. Therefore, the mechanical seal stabilizes surface pressure.

It may be preferable that the axial gap is continuous across circumferential and radial directions. According to this preferable configuration, the radial-direction extending portion can be prevented from being elastically deformed in the axial direction along the circumferential direction. Therefore, the elastic force of the radial-direction extending portion can be prevented from acting on the one of the stationary seal ring and the rotating seal ring.

It may be preferable that the radial-direction extending portion is in contact with either the one of the stationary seal ring and the rotating seal ring, or the case in the axial direction. According to this preferable configuration, the axial gap can be formed more reliably.

It may be preferable that a radial gap is formed between the radial-direction extending portion and the at least one of the one of the stationary seal ring and the rotating seal ring, and the case. According to this preferable configuration, the axial gap can be formed more reliably.

It may be preferable that the gasket has an axial-direction extending portion located between the one of the stationary seal ring and the rotating seal ring, and the case in the radial direction, and the case has a reverse tapered portion that extends toward another one of the stationary seal ring and the rotating seal ring while inclining toward the axial-direction extending portion. According to this preferable configuration, the gap between the case and the one of the stationary seal ring and the rotating seal ring can be narrower toward the other seal ring, reliably preventing the gasket from coming off.

### {BRIEF DESCRIPTION OF DRAWINGS}

FIG. 1 is a sectional view illustrating a mechanical seal according to a first embodiment of the present invention; FIG. 1A is an overall sectional view and FIG. 1B is an enlarged sectional view of a main portion.
FIG. 2 is a sectional view illustrating a mechanical seal according to a second embodiment of the present invention; FIG. 2A is an overall sectional view and FIG. 2B is an enlarged sectional view of a main portion.
FIG. 3 is a sectional view illustrating a mechanical seal according to a third embodiment of the present invention; FIG. 3A is an overall sectional view and FIG. 3B is an enlarged sectional view of a main portion.
FIG. 4 is a sectional view illustrating a mechanical seal according to a fourth embodiment of the present invention; FIG. 4A is an overall sectional view and FIG. 4B is an enlarged sectional view of a main portion.
FIG. 5 is a sectional view illustrating a mechanical seal according to a fifth embodiment of the present invention; FIG. 5A is an overall sectional view and FIG. 5B is an enlarged sectional view of a main portion.

### {DESCRIPTION OF EMBODIMENTS}

Modes for implementing a mechanical seal according to the present invention will be described below based on embodiments.

### {First embodiment}

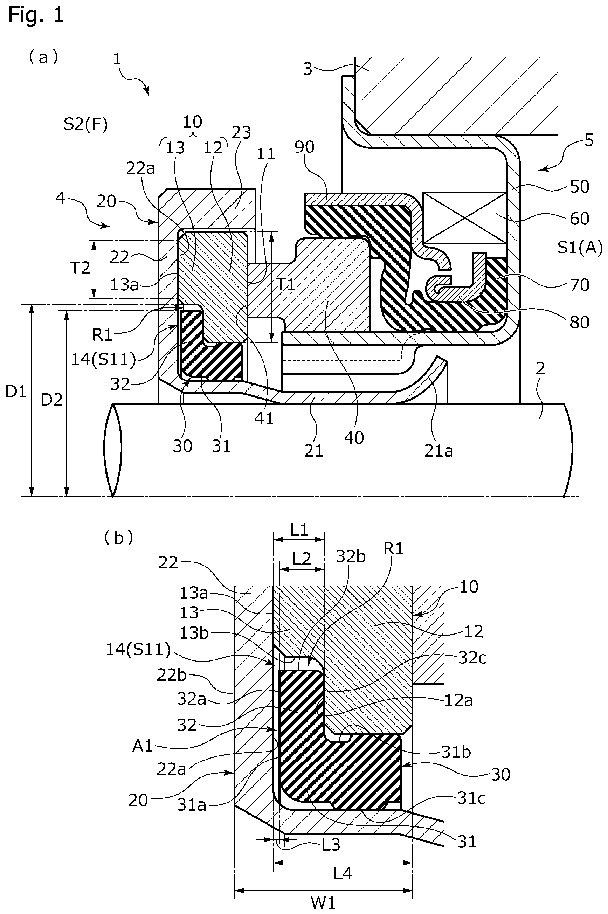

A mechanical seal according to a first embodiment of the present invention will be described with reference to FIG. 1. Hereinafter, the description will be made based on the assumption that the left side of the drawing sheet of FIG. 1 is a left side and the right side of the drawing sheet is a right side.

As illustrated in FIG. 1, a mechanical seal 1 according to the present embodiment is provided for sealing between a rotating shaft 2 and a housing 3 in a fluid device. The mechanical seal 1 is an inside mechanical seal in which sliding surfaces 11, 41 seal between an inner space S1 and an outer space S2. The inner space S1 is a leakage space in communication with an atmosphere A. The outer space S2 is a sealed fluid space into which a sealed fluid F flows. Incidentally, in the present embodiment, a mode in which the sealed fluid F is a high-pressure liquid and the atmosphere A has a lower pressure than the sealed fluid F is provided as an example.

The mechanical seal 1 mainly includes a rotating side element 4 and a stationary side element 5.

The rotating side element 4 mainly includes a rotating seal ring 10 as one seal ring, a sleeve 20 as a case, and a cup gasket 30 as a gasket.

The rotating seal ring 10 is provided so as to be capable of rotating together with the rotating shaft 2 via the sleeve 20 and the cup gasket 30.

The stationary side element 5 mainly includes a stationary seal ring 40 as the other seal ring, a seal cover 50, a biasing member 60, a bellows 70, a band 80, and a retainer 90. Namely, the mechanical seal 1 of the present embodiment is a stationary mechanical seal.

The stationary seal ring 40 is attached to the seal cover 50 via the bellows 70, the band 80, and the retainer 90. Accordingly, the stationary seal ring 40 is provided so as to be prevented from rotating and be movable in an axial direction relative to the seal cover 50 fixed to the housing 3. In addition, the bellows 70 seals between the stationary seal ring 40 and the seal cover 50.

The stationary seal ring 40 is biased in the axial direction by the biasing member 60. Accordingly, a sliding surface 41 in the stationary seal ring 40 and a sliding surface 11 in the rotating seal ring 10 are adapted to be brought into close sliding contact with each other.

The configuration of the rotating side element 4 will be described in details below. The rotating seal ring 10 includes a base 12 on the side of the sliding surface 11 and an annular protruded portion 13 protruding on the back surface side and is formed in a cylindrical shape with a step on a radially inner side.

The base 12 is a cylindrical portion having a substantially rectangular shape. The base 12 is provided with the sliding surface 11. In addition, a back surface 12a (see FIG. 1B) in the base 12 extends linearly in a radial direction.

The annular protruded portion 13 has an inner diameter longer than the inner diameter of the base 12 and is a cylindrical portion having a substantially rectangular shape. The outer peripheral surface in the annular protruded portion 13 is flush with the outer peripheral surface in the base 12. In addition, the annular protruded portion 13 has a back surface 13a extending linearly in the radial direction and being the back side end face in the seal ring.

Incidentally, the back side end face in the seal ring is the end face in the seal ring that is located opposite to the sliding surface in the axial direction, namely, the end face in the seal ring that is located on the back side when the sliding surface side is considered to be the front side in the seal ring.

As illustrated in FIG. 1B, a radially inner surface 13b in the annular protruded portion 13 is continuous with and substantially perpendicular to the back surface 12a in the base 12 and the back surface 13a in the annular protruded portion 13.

In more detail about the radially inner surface 13b, it is curved in a quarter arc shape from the radially outer end of the back surface 12a in the base 12 toward the radially outer side and the left in the axial direction, extends linearly to the left in the axial direction, extends to the left and inclined toward the radially outer side, and is continuous with the radially inner end of the back surface 13a in the annular protruded portion 13.

In addition, in the rotating seal ring 10, an annular recessed portion 14 is defined as a recessed portion by the back surface 12a in the base 12 and the radially inner surface 13b in the annular protruded portion 13. The annular recessed portion 14 is open toward the left side in the axial direction and toward the radially inner side.

As illustrated in FIG. 1A, the sleeve 20 includes an inner cylinder 21, an annular wall 22, and an outer cylinder 23.

The inner cylinder 21 has a cylindrical shape extending in the axial direction.

The annular wall 22 is flat and annular, and extends from the left end of the inner cylinder 21 toward the radially outer side.

The outer cylinder 23 has a cylindrical shape and extends from the radially outer end in the annular wall 22 to the right in the axial direction. The outer cylinder 23 has a larger diameter than the inner cylinder 21.

The sleeve 20 has a housing space defined by the outer peripheral surface in the inner cylinder 21, the radially inner side curved surface in the annular wall 22, the inner surface 22a therein, the radially outer side curved surface therein, and the inner peripheral surface in the outer cylinder 23. The rotating seal ring 10 and the cup gasket 30 are disposed in the housing space.

The radially inner side curved surface in the annular wall 22 is curved in a quarter arc shape from the left end of the outer peripheral surface in the inner cylinder 21 toward the radially outer side and the left in the axial direction. The inner surface 22a in the annular wall 22 extends linearly in the radial direction from the radially outer end in the radially inner side curved surface and is the front end face in the case. The radially outer side curved surface in the annular wall 22 is curved in a quarter arc shape from the radially outer end in the inner surface 22a toward the radially outer side and the right in the axial direction, and is continuous with the left end of the inner peripheral surface in the outer cylinder 23.

Incidentally, the front end face in the case is the end face disposed opposite to the back end face in the seal ring, namely, the end face located on the front side with respect to the seal ring.

The cup gasket 30 is made of elastomer, includes an axial-direction extending portion 31 and a radial-direction extending portion 32 on the radially outer side of the axial-direction extending portion 31, and has a substantially L-shaped section. Incidentally, the cup gasket 30 is not limited to being made of elastomer, and the material may be changed as appropriate as long as it is more easily elastically deformed than those of the rotating seal ring 10 and the sleeve 20.

The axial-direction extending portion 31 is a cylindrical portion extending in the axial direction. In addition, a back surface 31a of the axial-direction extending portion 31 extends linearly in the radial direction (see FIG. 1B).

As illustrated in FIG. 1B, a portion of the axial-direction extending portion 31 on the right side from the center in the axial direction bulges toward the radially outer side. The outer peripheral surface thereof extending linearly on the left side of the bulging portion is an outer peripheral surface 31b in the axial-direction extending portion 31.

In addition, the axial-direction extending portion 31 has a bulging portion 31c that consists of a portion bulging toward the radially outer side on the right side from the center in the axial direction and a portion bulging toward the radially inner side at the center in the axial direction. Incidentally, the shape of the bulging portion 31c may be of only the portion bulging toward the radially outer side on the right side from the center in the axial direction, or only the portion bulging toward the radially inner side at the center in the axial direction, or the shape may be changed as appropriate.

The radial-direction extending portion 32 is a flat and annular portion extending toward the radially outer side from the left end in the axial-direction extending portion 31, in other words, is located on the radially outer side on the left side of the outer peripheral surface 31b.

The back surface 32a in the radial-direction extending portion 32 is flush with the back surface 31a in the axial-direction extending portion 31 and extends linearly in the radial direction.

A radially outer surface 32b in the radial-direction extending portion 32 extends to the right in the axial direction from the radially outer end in the back surface 32a, is curved in a quarter-circular arc shape toward the radially inner side and the right side in the axial direction, and is continuous with the radially outer end of a front surface 32c in the radial-direction extending portion 32. The front surface 32c in the radial-direction extending portion 32 extends linearly in the radial direction.

Next, a method of assembling the rotating side element 4 will be described. First, the cup gasket 30 is fitted into the rotating seal ring 10.

The tip side of the axial-direction extending portion 31 in the cup gasket 30 is fitted into the base 12 in the rotating seal ring 10. The center axis in the cup gasket 30 and the center axis in the rotating seal ring 10 are disposed in substantially the same straight line.

As illustrated in FIG. 1A, the annular recessed portion 14 in the rotating seal ring 10 has an inner diameter D1 longer than an outer diameter D2 of the radial-direction extending portion 32 in the cup gasket 30 (D1>D2). This prevents the radial-direction extending portion 32 from being brought into contact with the annular protruded portion 13 when the cup gasket 30 is fitted into the rotating seal ring 10.

Incidentally, in order to clearly illustrate the radial gap R1, the inner diameter D1 of the rotating seal ring 10 is of an axial-direction extending portion of the radially inner surface 13b in the rotating seal ring 10. Similarly, the outer diameter D2 of the radial-direction extending portion 32 is of an axial-direction extending portion in the radially outer surface 32b of the radial-direction extending portion 32.

As illustrated in FIG. 1B, in a state where the cup gasket 30 is fitted into the rotating seal ring 10, the front surface 32c of the radial-direction extending portion 32 in the cup gasket 30 is brought into surface contact with the back surface 12a in the base 12. Accordingly, the cup gasket 30 is positioned in the axial direction with respect to the rotating seal ring 10.

In addition, a radial gap R1 is formed between the radially inner surface 13b of the annular protruded portion 13 in the rotating seal ring 10 and the radially outer surface 32b of the radial-direction extending portion 32 in the cup gasket 30. The radial gap R1 is continuous across circumferential and axial directions of the radially outer surface 32b in the radial-direction extending portion 32. In other words, the entire radially inner surface 13b in the rotating seal ring 10 and the entire radially outer surface 32b in the cup gasket 30 are in a non-contact state, namely, the radially outer surface 32b is in a non-contact state with the radially inner surface 13b across the circumferential and axial directions.

The rotating seal ring 10 is then fitted onto the inner cylinder 21 in the sleeve 20 together with the cup gasket 30.

Incidentally, although not illustrated directly, in the method of assembling the rotating side element 4, a right end portion 21a in the axial direction of the inner cylinder 21 is not curved toward the radially outer side as illustrated in FIG. 1A, and simply extends in the axial direction. The bending process of the right end portion 21a in the axial direction in the inner cylinder 21 is performed after the rotating side element 4 and the stationary side element 5 are assembled.

The axial-direction extending portion 31 in the cup gasket 30 is fitted onto the inner cylinder 21 in the sleeve 20. The center axis in the cup gasket 30 and the center axis in the sleeve 20 are disposed in substantially the same straight line.

The bulging portion 31c (see FIG. 1B) in the axial-direction extending portion 31 is pressed against the outer peripheral surface in the inner cylinder 21 and the inner peripheral surface of the base 12 in the rotating seal ring 10. Accordingly, a gap between the rotating seal ring 10 and the sleeve 20 is sealed.

Incidentally, for example, as in a third embodiment described later, as long as the gap between the rotating seal ring 10 and the sleeve 20 can be sealed, the bulging portion 31c may not be provided. Namely, the shape of the axial-direction extending portion 31 may be changed as appropriate as long as the gap between the rotating seal ring 10 and the sleeve 20 can be sealed.

In addition, as described above, the radial-direction extending portion 32 in the cup gasket 30 is in contact with the base 12. Therefore, when the rotating seal ring 10 is moved toward the annular wall 22 in the sleeve 20, the cup gasket 30 is restricted from moving to the right in the axial direction relative to the rotating seal ring 10, namely, in a direction in which the cup gasket comes off.

The back surface 13a of the annular protruded portion 13 in the rotating seal ring 10 is brought into contact with the inner surface 22a in the annular wall 22 in the axial direction. Accordingly, the rotating seal ring 10 is positioned relative to the sleeve 20 in the axial direction, and the method of assembling the rotating side element 4 is completed.

Incidentally, in the present invention, the term "contact in the axial direction" may means that at least an axial component is included in a direction of contact. In addition, in the present invention, the term "contact" is not limited to a state of contact without any gaps, but also includes a state in which true contact portions are scattered when viewed microscopically and a fluid flows between the members due to capillary action or the like, in other words, a state of contact when viewed macroscopically.

Incidentally, in the method of assembling the rotating side element 4, the cup gasket 30 may be first fitted onto the sleeve 20, and then the rotating seal ring 10 may be attached to the sleeve 20, as in a second embodiment described later, or the method may be changed as appropriate.

In the rotating side element 4 assembled as described above, an axial space S11 is formed between the base 12 in the rotating seal ring 10 and the annular wall 22 in the sleeve 20 in the axial direction, as illustrated in FIG. 1B.

The axial space S11 is defined by the back surface 12a in the base 12, the radially inner surface 13b of the annular protruded portion 13 in the rotating seal ring 10, and the inner surface 22a in the annular wall 22. Namely, the axial space S11 is a space interposed between the back surface 12a in the base 12 and the inner surface 22a in the annular wall 22, which face each other in the axial direction.

An axial dimension L1 of the axial space S11, in other words, the axial dimension of the annular protruded portion 13 in the rotating seal ring 10 and the axial dimension of the annular recessed portion 14 is longer than an axial dimension L2 of the radial-direction extending portion 32 in the cup gasket 30 (L1>L2).

Accordingly, with a simple configuration in which the radial-direction extending portion 32 in the cup gasket 30 is disposed in the annular recessed portion 14 in the rotating seal ring 10, an axial gap A1 can be formed between the inner surface 22a of the annular wall 22 in the sleeve 20 and the back surfaces 31a, 32a in the cup gasket 30. An axial dimension L3 of the axial gap A1 is the difference between the axial dimension L1 and the axial dimension L2 (L3=L1-L2).

Since the axial gap A1 is formed, the radial-direction extending portion 32 is less likely to be compressed between the base 12 in the rotating seal ring 10 and the sleeve 20 and be elastically deformed. Namely, the elastic force of the radial-direction extending portion 32 acting on the rotating seal ring 10 can be reduced as much as possible. Therefore, the mechanical seal 1 stabilizes surface pressure.

In addition, the mechanical seal 1 can maintain a state in which the back surface 13a of the annular protruded portion 13 in the rotating seal ring 10 is in surface contact with the inner surface 22a in the annular wall 22 in the sleeve 20. Accordingly, in the assembly, a seal width W1 of the individual mechanical seal 1, namely, the axial dimension from the sliding surface 11 in the rotating seal ring 10 to the outer surface 22b of the annular wall 22, can be aligned.

Incidentally, the back surface 13a in the annular protruded portion 13 and the inner surface 22a in the sleeve 20 are the back side end face in the seal ring of the present invention and the front side end face in the case of the present invention, which is brought into contact with each other in the axial direction, but the configuration may be changed as appropriate. For example, the radially outer side back surface of the base 12 protruding on the radially outer side of the annular protruded portion 13 may be the back end face in the seal ring of the present invention, and the radially outer side inner surface formed on the right side of the inner surface 22a in the sleeve 20 in the axial direction may be the front side end face in the case of the present invention, which is brought into contact with the back side end face in the axial direction. Namely, the back side end face in the seal ring of the present invention and the front side end face in the case of the present invention only need to be brought into contact with each other in the axial direction, and their positions, number, and shapes may be changed as appropriate.

In addition, in the mechanical seal 1, the elastic restoring force of the biasing member 60 acts on the rotating seal ring 10 via the stationary seal ring 40 (see FIG. 1A). Therefore, the back surface 13a of the annular protruded portion 13 in the rotating seal ring 10 can be more reliably maintained in contact with the inner surface 22a in the annular wall 22.

Accordingly, the sealed fluid F is less likely to suddenly flow into the axial space S11 through a gap between the back surface 13a in the annular protruded portion 13 and the inner surface 22a in the annular wall 22. This prevents any change in the fluid pressure of the sealed fluid F from immediately affecting the cup gasket 30.

In addition, since the back surface 13a in the annular protruded portion 13 is in surface contact with the inner surface 22a in the annular wall 22, for example, heat dissipation properties against sliding heat generation are improved, and contamination and impurities are less likely to enter the axial space S11.

Further, as illustrated in FIG. 1A, a radial dimension T1 from the inner peripheral surface to the outer peripheral surface of the base 12 in the rotating seal ring 10 is substantially twice a radial dimension T2 of the back surface 13a in the annular protruded portion 13 (T1>T2). Accordingly, a sufficient contact area between the rotating seal ring 10 and the sleeve 20 can be secured. The relative tilting between the rotating seal ring 10 and the sleeve 20 is prevented, making it easier to maintain the assembled state.

In other words, the annular recessed portion 14 is formed so that a sufficient contact area between the rotating seal ring 10 and the sleeve 20 is ensured. This also applies to the case where an annular recessed portion 224 is formed in a sleeve 220 as in the third embodiment described later.

Incidentally, in the present embodiment, the annular protruded portion 13 is brought into surface contact with the sleeve 20 to enhance heat dissipation; however, the present invention is not limited thereto, and a rivet-shaped protruded portion provided on the annular protruded portion 13 may be brought into contact therewith or a wavy protruded portion may be brought into contact therewith, namely, the present invention is not limited to surface contact but may be point contact or line contact. Even with this configuration, the seal width W1 of the individual mechanical seal 1 can be aligned in the assembly.

In addition, although the rotating seal ring 10 is brought into direct contact with the sleeve 20, the present invention is not limited thereto, and the rotating seal ring 10 and the sleeve 20 may be indirectly in contact with each other. More specifically, a third member such as a spacer or washer may be provided between the one seal ring and the case, which is separate from the one seal ring and the case and is made of a material which is more rigid than the cup gasket, in other words, is less likely to be elastically deformed. Even with this configuration, the seal width W1 of the individual mechanical seal 1 can be aligned in the assembly.

In addition, the axial space in which the radial-direction extending portion in the cup gasket is disposed is not limited to be defined only by the one seal ring and the case, and may be defined by the one seal ring, the case, and the third member, or the configuration may be changed as appropriate. In other words, the axial dimension of the axial space may not be the same as the axial dimension of the annular recessed portion.

In addition, in the mechanical seal 1 of the present embodiment, the axial gap A1 is formed across the radial and circumferential directions of the back surfaces 31a, 32a in the cup gasket 30. In other words, the entire inner surface 22a in the sleeve 20 and the entire back surfaces 31a, 32a in the cup gasket 30 are in a non-contact state, namely, the back surfaces 31a, 32a are in a non-contact state with the inner surface 22a across the circumferential and radial directions. Accordingly, the radial-direction extending portion 32 can be prevented from being compressed in the axial direction, and the elastic force thereof can be prevented from acting on the rotating seal ring 10.

The axial dimension L3 of the axial gap A1 is substantially one-tenth of the axial dimension L1 of the axial space S11. Accordingly, the cup gasket 30 is less likely to come off from the gap between the rotating seal ring 10 and the sleeve 20.

Incidentally, the axial dimension L3 of the axial gap A1 may be changed as appropriate. From the viewpoint of preventing the cup gasket 30 from coming off the gap between the rotating seal ring 10 and the sleeve 20, the axial dimension L3 of the axial gap A1 is preferably equal to or smaller than one-third of the axial dimension L1 of the axial space S11.

In addition, in the mechanical seal 1 of the present embodiment, since the axial gap A1 is formed, even if the cup gasket 30 expands due to thermal expansion or absorption of the sealed fluid F, the radial-direction extending portion 32 is less likely to be brought into contact with the annular wall 22.

Further, the back surfaces 31a, 32a in the cup gasket 30 are disposed substantially parallel to the inner surface 22a in the sleeve 20. Therefore, while the axial gap A1 can be formed across the radial and circumferential directions of the back surface 32a in the radial-direction extending portion 32, the seal width W1 can be shortened.

Incidentally, the back surfaces 31a, 32a in the cup gasket 30 may be inclined relative to the inner surface 22a in the sleeve 20. Namely, at least one of the inner surface 22a and the back surfaces 31a, 32a may be an inclined surface inclined with respect to the axial direction or a curved surface, may have a rivet-shaped or wavy protruded portion formed thereon, may be textured, and the shape may be changed as appropriate as long as the axial gap A1 can be formed.

In addition, in the mechanical seal 1 of the present embodiment, the radial-direction extending portion 32 in the cup gasket 30 is disposed in the annular recessed portion 14 in the rotating seal ring 10. Compared to a configuration in which a radial-direction extending portion 232 is disposed on the axially outer side of a rotating seal ring 210 as in the third embodiment described later, the axial dimension L4 from the sliding surface 11 in the rotating seal ring 10 to the back surface 13a in the annular protruded portion 13 can be made longer if the seal width W1 is the same. Accordingly, the sliding surface 11 is easily formed flat.

In addition, the axial dimension of the annular recessed portion 14 in the rotating seal ring 10, namely, the axial dimension L1 of the axial space S11, is substantially one-third of the axial dimension L4 of the rotating seal ring 10. Accordingly, the sliding surface 11 can be easily formed flat while sufficient rigidity in the rotating seal ring 10 is ensured.

Incidentally, the axial dimension of the annular recessed portion 14 may be changed as appropriate. From the viewpoint of forming the sliding surface 11 flat while ensuring the rigidity in the rotating seal ring 10, the axial dimension of the annular recessed portion 14 is preferably equal to or less than half the axial dimension L4 of the rotating seal ring 10, and more preferably equal to or less than one-third.

In addition, in the mechanical seal 1 of the present embodiment, the radial-direction extending portion 32 is in contact with the base 12 in the rotating seal ring 10 in the axial direction. Accordingly, since the movement of the cup gasket 30 in the axial direction is restricted, the axial gap A1 can be formed more reliably.

Further, the mechanical seal 1 is an inside mechanical seal. The fluid pressure of the sealed fluid F acts on the radial-direction extending portion 32, so that the cup gasket 30 is pressed toward the base 12 in the rotating seal ring 10. Meanwhile, the radial-direction extending portion 32 is already in contact with the base 12. Accordingly, the movement of the cup gasket 30 in the axial direction is restricted more reliably.

Incidentally, the cup gasket 30 has been described as having the front surface 32c of the radial-direction extending portion 32 in surface contact with the back surface 12a in the base 12; however, the present invention is not limited thereto, and the back surface 12a in the base 12 may be an inclined surface extending from the radially inner end of the back surface 13a in the annular protruded portion 13 toward the inner peripheral surface of the base 12, or a curved surface, a rivet-shaped or wavy protruded portion may be formed on the back surface 12a, or the back surface 12a may be textured, and the configuration may be changed as appropriate as long as the movement of the cup gasket 30 in the axial direction can be restricted. In other words, the sectional shape of the annular recessed portion 14 may also be changed as appropriate as long as the movement of the cup gasket 30 in the axial direction can be restricted.

In addition, the configuration of the radial-direction extending portion 32 may be also changed as appropriate as long as the movement of cup gasket 30 in the axial direction can be restricted, and the radial-direction extending portion 32 may have an inclined surface inclined with respect to the axial direction or a curved surface formed thereon, may have a rivet-shaped or wavy protruded portion formed thereon, may be textured, or may have a shape following the shape of the recessed portion.

In addition, in the mechanical seal 1 of the present embodiment, the radial-direction extending portion 32 is disposed with a radial gap R1 between itself and the annular protruded portion 13 in the rotating seal ring 10. Accordingly, even if the cup gasket 30 expands, the radial-direction extending portion 32 can be prevented from being brought into contact with the annular protruded portion 13 and elastically deformed, and brought into contact with the annular wall 22. Therefore, the axial gap A1 can be left more reliably.

Incidentally, the back surfaces 31a, 32a in the cup gasket 30 may be in part contact with the inner surface 22a in the sleeve 20. In other words, the axial gap A1 may not be continuous across the circumferential and radial directions. Even with such a configuration, the elastic restoring force generated in the radial-direction extending portion 32 can be reduced.

In addition, the rotating side element 4 of the present embodiment may be applied to an outside mechanical seal in which the sealed fluid F flows into the inner space S1 and the outer space S2 is in communication with the atmosphere A. When the rotating side element 4 is applied to the outside mechanical seal, the cup gasket 30 is configured to be brought into contact with the annular wall 22 in the sleeve 20 as in the third embodiment described later. This is to restrict the cup gasket 30 from moving in the axial direction.

In addition, as in the second embodiment described later, the inner cylinder 21 in the sleeve 20 may have a reverse tapered shape, and the axial-direction extending portion 31 may prevent the cup gasket 30 located on the radially inner side from coming off.

### {Second embodiment}

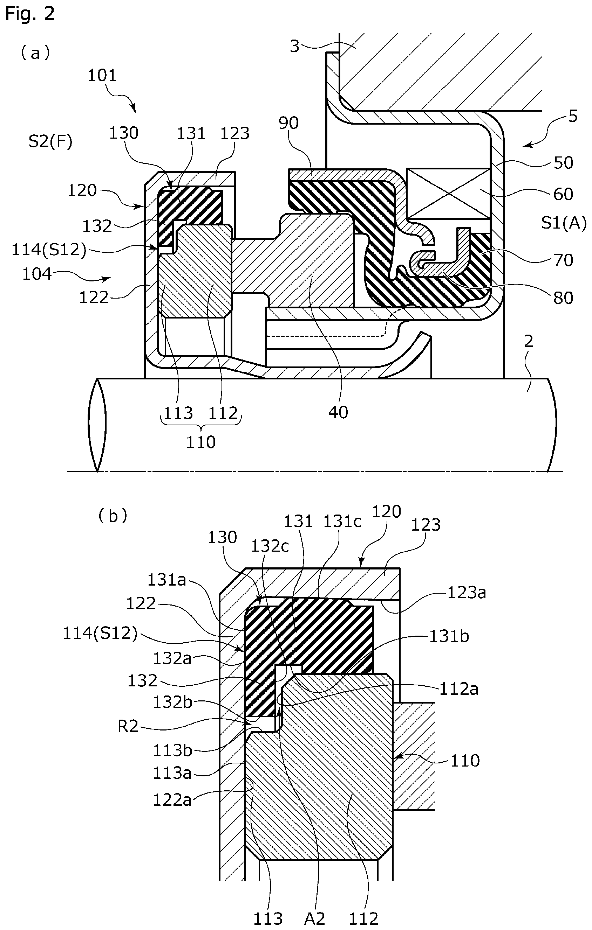

Next, a mechanical seal according to the second embodiment of the present invention will be described with reference to FIG. 2. Incidentally, the description of configurations that are the same as and overlap with the configurations of the first embodiment will be omitted.

As illustrated in FIG. 2, a mechanical seal 101 according to the present embodiment mainly includes a rotating side element 104 and the stationary side element 5.

As illustrated in FIG. 2B, a back surface 112a in a base 112 is located on the radially outer side of an annular protruded portion 113.

An annular recessed portion 114 in a rotating seal ring 110 is defined by the back surface 112a in the base 112 and a radially outer surface 113b in the annular protruded portion 113. The annular recessed portion 114 is open toward the left side in the axial direction and toward the radially outer side.

A radial-direction extending portion 132 in a cup gasket 130 is a portion located on the radially inner side of an inner peripheral surface 131b in an axial-direction extending portion 131.

Next, a method of assembling the rotating side element 104 will be described. First, the cup gasket 130 is fitted into an outer cylinder 123 in a sleeve 120.

The axial-direction extending portion 131 in the cup gasket 130 is fitted into the outer cylinder 123 in the sleeve 120.

In addition, back surfaces 131a, 132a in the cup gasket 130 are brought into surface contact with an inner surface 122a of the annular wall 122 in the sleeve 120. Accordingly, the cup gasket 130 is positioned relative to the sleeve 120.

The rotating seal ring 110 is then fitted into the cup gasket 130.

The base 112 in the rotating seal ring 110 is fitted into the axial-direction extending portion 131 in the cup gasket 130.

In addition, the back surface 113a of the annular protruded portion 113 in the rotating seal ring 110 is brought into surface contact with the inner surface 122a in the sleeve 120. Accordingly, the rotating seal ring 110 is positioned relative to the sleeve 120 and the cup gasket 130.

In the rotating side element 104 assembled as described above, a bulging portion 131c (see FIG. 2B) in the axial-direction extending portion 131 is pressed against an inner peripheral surface 123a in the outer cylinder 123 and the outer peripheral surface of the base 112 in the rotating seal ring 110. Accordingly, a gap between the rotating seal ring 110 and the sleeve 120 is sealed.

In addition, in the assembled rotating side element 104, an axial space S12 is formed between the base 112 in the rotating seal ring 110 and the annular wall 122 in the sleeve 120 in the axial direction.

In addition, an axial gap A2 is formed between the back surface 112a of the base 112 in the rotating seal ring 110 and the front surface 132c of the radial-direction extending portion 132 in the cup gasket 130. Accordingly, compression of the radial-direction extending portion 132 in the axial direction and the elastic force thereof acting on the rotating seal ring 110 can be reduced as much as possible. Therefore, the mechanical seal 101 stabilizes surface pressure.

Further, the mechanical seal 101 is an inside mechanical seal. The fluid pressure of the sealed fluid F acts on the axial-direction extending portion 131 facing the outer space S2, so that the cup gasket 130 is pushed toward the annular wall 122 in the sleeve 120. Meanwhile, the radial-direction extending portion 132 is in contact with the annular wall 122. Accordingly, the movement of the cup gasket 130 in the axial direction is more securely restricted.

In addition, the radial gap R2 is formed between the radially outer surface 113b of the annular protruded portion 113 in the rotating seal ring 110 and the radially inner surface 132b of the radial-direction extending portion 132 in the cup gasket 130. Accordingly, the axial gap A2 can be left more reliably.

In addition, the outer cylinder 123 in the sleeve 120 is a reverse tapered portion and has a reverse tapered shape. More specifically, the inner peripheral surface 123a in the outer cylinder 123 extends to the right in the axial direction and inclined toward the radially inner side, namely, toward the side of the axial-direction extending portion 131 in the cup gasket 130. Accordingly, the gap between the sleeve 120 and the rotating seal ring 110 can be narrower toward the stationary side element 5, reliably preventing the cup gasket 130 from coming off.

In addition, the rotating side element 104 of the present embodiment may be applied to an outside mechanical seal. When the rotating side element 104 is applied to the outside mechanical seal, the cup gasket 130 may be brought into contact with the annular wall 122 in the sleeve 120 as in the present embodiment, or the radial-direction extending portion 132 in the cup gasket 130 may be brought into contact with the base 112 in the rotating seal ring 110 as in the first embodiment.

### {Third embodiment}

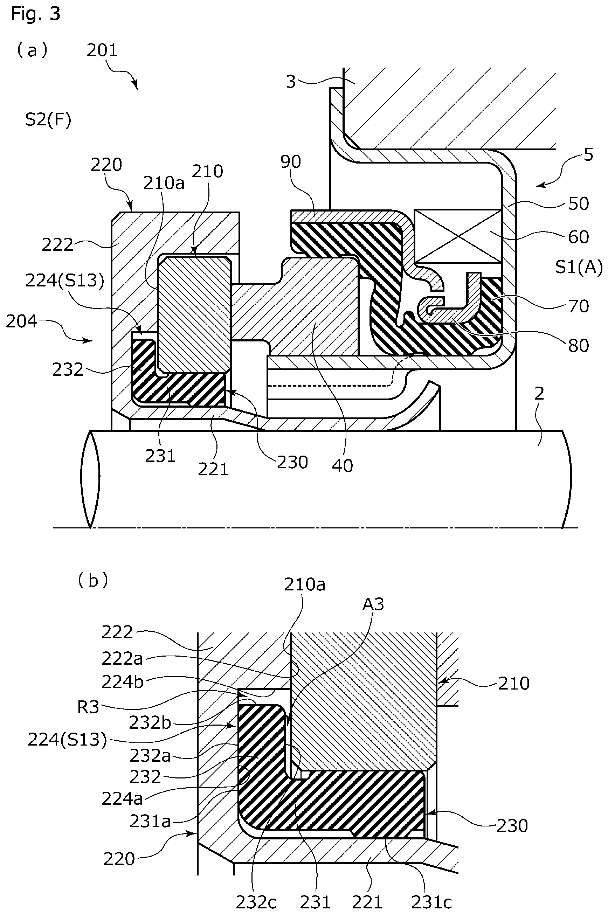

Next, a mechanical seal according to the third embodiment of the present invention will be described with reference to FIG. 3. Incidentally, the description of configurations that are the same as and overlap with the configurations of the first embodiment will be omitted.

As illustrated in FIG. 3, a mechanical seal 201 according to the present embodiment mainly includes a rotating side element 204 and the stationary side element 5.

The rotating seal ring 210 has a substantially rectangular section.

The sleeve 220 has the annular recessed portion 224 (see FIG. 3B) formed on the radially inner side of the annular wall 222. The annular recessed portion 224 is recessed on the left side in the axial direction of an inner surface 222a and is open toward the right side in the axial direction.

As illustrated in FIG. 3B, the annular recessed portion 224 is defined by an outer peripheral surface in an inner cylinder 221, a radially inner side curved surface, a flat surface 224a, and a radially inner surface 224b.

The flat surface 224a extends linearly in the radial direction. The radially inner surface 224b is substantially perpendicular to the radially outer end of the flat surface 224a and extends linearly to the right in the axial direction, and is substantially perpendicular to the radially inner end of the inner surface 222a.

Next, a method of assembling the rotating side element 204 will be described. First, a cup gasket 230 is fitted onto the inner cylinder 221 in the sleeve 220.

In addition, the radial-direction extending portion 232 in the cup gasket 230 is disposed within the annular recessed portion 224 in the sleeve 220. In addition, back surfaces 231a, 232a in the cup gasket 230 is brought into surface contact with the flat surface 224a in the sleeve 220.

The rotating seal ring 210 is then fitted onto the cup gasket 230.

In addition, a back surface 210a in the rotating seal ring 210 is brought into surface contact with the inner surface 222a in the sleeve 220. The back surface 210a in the rotating seal ring 210 is the back side end face in the seal ring, and the inner surface 222a in the sleeve 220 is the front side end face in the case.

In the rotating side element 204 assembled as described above, the bulging portion 231c (see FIG. 3B) in the axial-direction extending portion 231 is pressed against the outer peripheral surface in the inner cylinder 221 and the inner peripheral surface in the rotating seal ring 210. Accordingly, a gap between the rotating seal ring 210 and the sleeve 220 is sealed.

In addition, in the assembled rotating side element 204, an axial space S13 is formed between the back surface 210a in the rotating seal ring 210 and the flat surface 224a in the sleeve 220 in the axial direction.

In addition, an axial gap A3 is formed between the back surface 210a in the rotating seal ring 210 and a front surface 232c of the radial-direction extending portion 232 in the cup gasket 230. Accordingly, compression of the radial-direction extending portion 232 in the axial direction and the elastic force thereof acting on the rotating seal ring 210 can be reduced as much as possible. Therefore, the mechanical seal 201 stabilizes surface pressure.

Further, the mechanical seal 201 is an inside mechanical seal. The fluid pressure of the sealed fluid F acts on the radial-direction extending portion 232, so that the cup gasket 230 is pushed toward the flat surface 224a in the sleeve 220. Meanwhile, the radial-direction extending portion 232 is in contact with the flat surface 224a. Accordingly, the movement of the cup gasket 230 in the axial direction is more securely restricted.

In addition, the radial gap R3 is formed between the radially inner surface 224b in the sleeve 220 and the radially outer surface 232b of the radial-direction extending portion 232 in the cup gasket 230. Accordingly, the axial gap A3 can be left more reliably.

In addition, the annular recessed portion 224 in which the radial-direction extending portion 232 is disposed is formed in the sleeve 220, making it easier to manufacture the seal ring than when the annular recessed portion 14 is formed in the rotating seal ring 10 as in the first embodiment. More specifically, when the seal ring is molded, pressure is more easily transmitted uniformly to the seal ring, and unevenness in density is less likely to occur.

Incidentally, the recessed portion in the present invention may be formed in the case as in the present embodiment, may be formed in the seal ring as in the first and second embodiments, or may be formed in both the case and the seal ring. When the annular recessed portion in the present invention is formed in both the case and the seal ring, the seal width can be made shorter than the configuration where the recessed portion is formed only in the case as in the present embodiment, and the seal ring can be manufactured more easily than in the first and second embodiments.

In addition, the rotating side element 204 of the present embodiment may be applied to an outside mechanical seal in which the sealed fluid F flows into the inner space S1 and the outer space S2 is in communication with the atmosphere A. Even when the rotating side element 204 is applied to the outside mechanical seal, the radial-direction extending portion 232 in contact with the flat surface 224a can restrict the cup gasket 230 from moving in the axial direction.

### {Fourth embodiment}

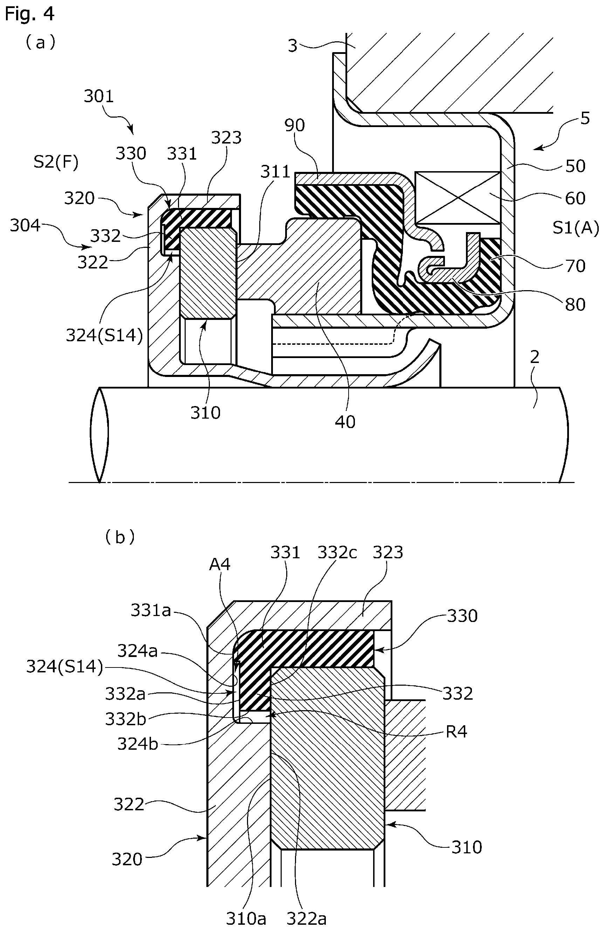

Next, a mechanical seal according to a fourth embodiment of the present invention will be described with reference to FIG. 4. Incidentally, the description of configurations that are the same as and overlap with the configurations of the first embodiment will be omitted.

As illustrated in FIG. 4, the mechanical seal 301 according to the present embodiment mainly includes a rotating side element 304 and the stationary side element 5.

As illustrated in FIG. 4B, a sleeve 320 has an annular recessed portion 324 formed on the radially outer side of the annular wall 322. The annular recessed portion 324 is defined by an inner peripheral surface in an outer cylinder 323, a radially outer side curved surface, a flat surface 324a, and a radially outer surface 324b.

In a cup gasket 330, the left end in an axial-direction extending portion 331 protrudes on the left side of a radial-direction extending portion 332. A back surface 331a in the axial-direction extending portion 331 is located on the left side in the axial direction of a back surface 332a in the radial-direction extending portion 332.

In addition, the back surface 331a in the axial-direction extending portion 331 is provided on the radially outer side of the outer peripheral surface in a rotating seal ring 310. Namely, the back surface 331a in the axial-direction extending portion 331 is spaced apart from the rotating seal ring 310 in the radial direction without overlapping with the rotating seal ring 310 in the axial direction.

Next, a method of assembling the rotating side element 304 will be described. First, the cup gasket 330 is fitted into the rotating seal ring 310.

The axial-direction extending portion 331 in the cup gasket 330 is fitted onto the rotating seal ring 310. In addition, the radial-direction extending portion 332 in the cup gasket 330 has a front surface 332c that is brought into contact with a back surface 310a in the rotating seal ring 310.

The rotating seal ring 310 is then fitted into the outer cylinder 323 in the sleeve 320.

An axial-direction extending portion 331 in the cup gasket 330 is fitted into the outer cylinder 323 in the sleeve 320.

In addition, the back surface 310a in the rotating seal ring 310 is brought into surface contact with an inner surface 322a in the sleeve 320.

In the rotating side element 304 assembled as described above, the axial-direction extending portion 331 is pressed against the inner peripheral surface in the outer cylinder 323 and the outer peripheral surface in the rotating seal ring 310 in surface contact. Accordingly, a gap between the rotating seal ring 310 and the sleeve 320 is sealed. Incidentally, the axial-direction extending portion 331 may be provided with a bulging portion as in the first embodiment.

In addition, in the assembled rotating side element 304, an axial space S14 is formed between the back surface 310a in the rotating seal ring 310 and the flat surface 324a in the sleeve 320 in the axial direction.

In addition, an axial gap A4 is formed between the flat surface 324a in the sleeve 320 and the back surface 332a of the radial-direction extending portion 332 in the cup gasket 330. Accordingly, compression of the radial-direction extending portion 332 in the axial direction and the elastic force thereof acting on the rotating seal ring 310 can be reduced as much as possible. Therefore, the mechanical seal 301 stabilizes surface pressure.

In addition, the axial gap A4 is formed across the radial and circumferential directions of the back surface 332a in the cup gasket 330. Accordingly, the radial-direction extending portion 332 can be prevented from being compressed in the axial direction, and the elastic force thereof can be prevented from acting on the rotating seal ring 310.

In addition, the back surface 331a in the axial-direction extending portion 331 is pressed against the flat surface 324a in the sleeve 320. The right end in the axial-direction extending portion 331, which is located opposite to the back surface 331a in the axial direction, faces the outer space S2. Further, the back surface 331a in the axial-direction extending portion 331 is spaced apart from the rotating seal ring 310 in the radial direction without overlapping with the rotating seal ring 310 in the axial direction. Accordingly, even if the left end in the axial-direction extending portion 331 is elastically deformed, the elastic restoring force thereof is less likely to act on the rotating seal ring 310.

In this way, as long as the radial-direction extending portion 332 is disposed with the axial gap A4 between the rotating seal ring 310 and the sleeve 320, the axial-direction extending portion 331 may be in contact with the sleeve 320.

In addition, the axial-direction extending portion 331 in the cup gasket 330 protrudes on the left side of the radial-direction extending portion 332. Therefore, the cup gasket 330 can form the axial gap A4 more reliably.

Further, the mechanical seal 301 is an inside mechanical seal. The fluid pressure of the sealed fluid F acts on the axial-direction extending portion 331 facing the outer space S2, so that the cup gasket 330 is pushed toward the annular wall 322 in the sleeve 320. Meanwhile, the back surface 331a in the axial-direction extending portion 331 is in contact with the annular wall 322. Accordingly, the movement of the cup gasket 330 in the axial direction is restricted more reliably.

In addition, the radial gap R4 is formed between the radially outer surface 324b in the sleeve 320 and the radially inner surface 332b of the radial-direction extending portion 332 in the cup gasket 330. Accordingly, the radial-direction extending portion 332 can be prevented from being brought into contact with the sleeve 320 and elastically deformed, and being brought into contact with the rotating seal ring 310. Therefore, the axial gap A4 can be left more reliably.

Incidentally, the rotating side element 304 of the present embodiment may be applied to an outside mechanical seal. When the rotating side element 304 is applied to the outside mechanical seal, the cup gasket 330 may be brought into contact with the annular wall 322 in the sleeve 320 as in the present embodiment, or the radial-direction extending portion 332 in the cup gasket 330 may be brought into contact with the rotating seal ring 310 as in the first embodiment.

### {Fifth embodiment}

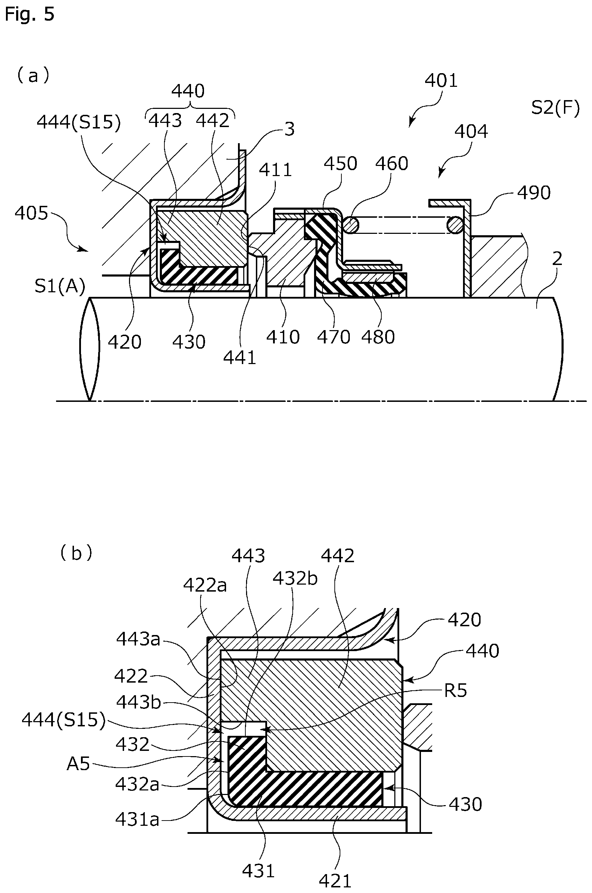

Next, a mechanical seal according to a fifth embodiment of the present invention will be described with reference to FIG. 5. Incidentally, the description of configurations that are the same as and overlap with the configurations of the first embodiment will be omitted.

As illustrated in FIG. 5, a mechanical seal 401 according to the present embodiment mainly includes a rotating side element 404 and a stationary side element 405.

The rotating side element 404 mainly includes a rotating seal ring 410 as the other seal ring, a sleeve 450, a coil spring 460 as a biasing member, a rubber bellows 470, a drive ring 480, and a collar 490. Namely, the mechanical seal 401 of the present embodiment is a rotating mechanical seal.

The rotating seal ring 410 is attached to the rotating shaft 2 via the sleeve 450 and the rubber bellows 470. In addition, the sleeve 450 and the rubber bellows 470 are prevented from rotating with respect to the rotating shaft 2 by the drive ring 480.

Accordingly, the rotating seal ring 410 is provided in a non-rotating state and relatively movable in the axial direction with respect to the rotating shaft 2. In addition, the rubber bellows 470 seals between the rotating seal ring 410 and the rotating shaft 2 and the sleeve 450.

In addition, the rotating seal ring 410 is biased in the axial direction by the coil spring 460 disposed between the sleeve 450 and the collar 490. Accordingly, a sliding surface 411 in the rotating seal ring 410 and a sliding surface 441 in a stationary seal ring 440 are adapted to slide in close contact with each other.

The stationary side element 405 mainly includes the stationary seal ring 440 as one seal ring, a seal case 420 as a case, and a cup gasket 430.

Incidentally, a method of assembling the stationary side element 405 is substantially the same as the method of assembling the rotating side element 4 in the first embodiment, and therefore a description thereof will be omitted.

As illustrated in FIG. 5B, in the assembled stationary side element 405, the axial-direction extending portion 431 is pressed against the outer peripheral surface in the inner cylinder 421 and the inner peripheral surface of a base 442 in the stationary seal ring 440 in surface contact. Accordingly, a gap between the stationary seal ring 440 and the seal case 420 is sealed.

In addition, in the assembled stationary side element 405, a back surface 443a of an annular protruded portion 443 in the stationary seal ring 440 and an inner surface 422a in the annular wall 422 are in surface contact with each other.

In addition, in the assembled stationary side element 405, an axial space S15 is formed between the base 442 in the stationary seal ring 440 and the annular wall 422 in the seal case 420 in the axial direction.

A radial-direction extending portion 432 in the cup gasket 430 is disposed in an annular recessed portion 444 in the stationary seal ring 440.

An axial gap A5 is formed between the inner surface 422a in the annular wall 422 and back surfaces 431a, 432a in the cup gasket 430. Accordingly, compression of the radial-direction extending portion 432 in the axial direction and the elastic force thereof acting on the stationary seal ring 440 can be reduced as much as possible. Therefore, the mechanical seal 401 stabilizes surface pressure.

In addition, a radial gap R5 is formed between a radially inner surface 443b of the annular protruded portion 443 in the stationary seal ring 440 and a radially outer surface 432b of the radial-direction extending portion 432 in the cup gasket 430. Accordingly, the axial gap A5 can be left more reliably.

As described above, even in a rotating mechanical seal in which a biasing member is installed on the rotating seal ring side, the cup gasket structure of the present invention, namely, a structure in which the axial gap is formed between the radial-direction extending portion and at least one of the stationary seal ring and the case, can be applied to a stationary sealing element to achieve the same effect as a stationary mechanical seal.

Incidentally, the stationary side element 405 of the present embodiment may be applied to an outside mechanical seal in which the sealed fluid F flows into the inner space S1 and the outer space S2 is in communication with the atmosphere A. When the stationary side element 405 is applied to the outside mechanical seal, the cup gasket 430 is preferably configured to be brought into contact with the annular wall 422 in the seal case 420 as in the third embodiment. This is to restrict the cup gasket 430 from moving in the axial direction.

The embodiments of the present invention have been described above with reference to the drawings; however, the specific configurations are not limited to the embodiments, and changes or additions that are made without departing from the scope of the present invention are included in the present invention.

For example, in the first to fifth embodiments described above, a mode in which the axial gap is formed between one of the seal rings and the radial-direction extending portion or between the case and the radial-direction extending portion has been provided as an example; however, the present invention is not limited thereto, and the axial gap may be formed between the one seal ring and the radial-direction extending portion and between the case and the radial-direction extending portion.

In addition, in the first to fifth embodiments described above, the sealed fluid is described as a high-pressure liquid; however, the present invention is not limited thereto, and the sealed fluid may be a gas or a low-pressure liquid, or a mist in which a liquid and a gas are mixed.

In addition, in the first to fifth embodiments described above, the fluid on the leakage space side is described as being an atmosphere, which is a low-pressure gas; however, the present invention is not limited thereto, and the liquid on the leakage space side may be a liquid or a high-pressure gas, or may be a mist in which a liquid and a gas are mixed.

In addition, in the first to fifth embodiments described above, the description will be made based on the assumption that the sealed fluid space side is the high pressure side and the leakage space side is the low pressure side; however, the sealed fluid space side may be the low pressure side and the leakage space side may be the high pressure side, or the sealed fluid space side and the leakage space side may have substantially the same pressure.

### {REFERENCE SIGNS LIST}

1 Mechanical seal
2 Rotating shaft
3 Housing
10 Rotating seal ring
14 Annular recessed portion (recessed portion)
20 Sleeve (case)
30 Cup gasket (gasket)
31 Axial-direction extending portion
32 Radial-direction extending portion
40 Stationary seal ring
50 Seal cover
60 Biasing member
70 Bellows
80 Band
90 Retainer
101 Mechanical seal
110 Rotating seal ring
114 Annular recessed portion (recessed portion)
120 Sleeve (case)
123 Outer cylinder (reverse tapered portion)
130 Cup gasket (gasket)
131 Axial-direction extending portion
132 Radial-direction extending portion
201, 301 Mechanical seal
210, 310 Rotating seal ring
220, 320 Sleeve (case)
224, 324 Annular recessed portion (recessed portion)
230, 330 Cup gasket (gasket)
231, 331 Axial-direction extending portion
232, 332 Radial-direction extending portion
401 Mechanical seal
410 Rotating seal ring
420 Seal case (case)
430 Cup gasket (gasket)
431 Axial-direction extending portion
432 Radial-direction extending portion
440 Stationary seal ring
444 Annular recessed portion (recessed portion)
450 Seal cover
460 Coil spring
470 Rubber bellows
480 Drive ring
490 Collar
A1 to A5 Axial gap
R1 to R5 Radial gap
S11 to S15 Axial space
W1 Seal width

## Claims

1. A mechanical seal comprising:
a stationary seal ring attached to a side of a housing;
a rotating seal ring attached to a side of a rotating shaft extending through the housing;
a case configured for holding one of the stationary seal ring and the rotating seal ring; and
a gasket disposed between the one of the stationary seal ring and the rotating seal ring, and the case,
wherein sliding surfaces of the stationary seal ring and the rotating seal ring which rotate relatively and slidably with each other to separate a sealed fluid space from a leakage space,
the one of the stationary seal ring and the rotating sear ring, and the case are brought into contact with each other in an axial direction,
the gasket has a radial-direction extending portion located between the one of the stationary seal ring and the rotating seal ring, and the case in the axial direction,
the radial-direction extending portion is disposed in a recessed portion formed so as to be recessed in the axial direction from at least one of the one of the stationary seal ring and the rotating seal ring, and the case, and
an axial gap is formed between the radial-direction extending portion and at least one of the one of the stationary seal ring and the rotating seal ring, and the case.

2. The mechanical seal according to claim 1, wherein
the axial gap is continuous across circumferential and radial directions.

3. The mechanical seal according to claim 1, wherein
the radial-direction extending portion is in contact with either the one of the stationary seal ring and the rotating seal ring, or the case in the axial direction.

4. The mechanical seal according to any one of claims 1 to 3, wherein
a radial gap is formed between the radial-direction extending portion and the at least one of the one of the stationary seal ring and the rotating seal ring, and the case.

5. The mechanical seal according to claim 1, wherein
the gasket has an axial-direction extending portion located between the one of the stationary seal ring and the rotating seal ring, and the case in the radial direction, and
the case has a reverse tapered portion that extends toward another one of the stationary seal ring and the rotating seal ring while inclining toward the axial-direction extending portion.
